# EUROPÄISCHE PATENTSCHRIFT

(11) **EP 0 722 897 B1**
(45) Veröffentlichungstag und Bekanntmachung des Hinweises auf die Patenterteilung: **07.01.1999**
(21) Anmeldenummer: 95116007.6
(22) Anmeldetag: 11.10.1995
(51) Int. Cl.: B65G 47/90, B65G 49/08, B65G 57/20

(54) **Vorrichtung zum Greifen von quaderförmigen Körpern, insbesondere von Steinformlingen, Steinen oder dergleichen**
Gripping device for parallelepipedic objects, especially green bricks, stones and the like
Dispositif de préhension de corps parallélépipédiques, notamment de briques crues, de pierres ou similaires

(30) Priorität: 21.01.1995 DE 19501813
(43) Veröffentlichungstag der Anmeldung: 24.07.1996
(73) Patentinhaber: DORSTENER MASCHINENFABRIK AKTIENGESELLSCHAFT, D-46284 Dorsten (DE)
(72) Erfinder: Lütkenhorst, Günter, D-46282 Dorsten (DE)
(74) Vertreter: Honke, Manfred, Dr.-Ing.

(56) Entgegenhaltungen:
- DD-A- 212 943
- DE-A- 1 756 152
- DE-A- 3 314 204

## Beschreibung

Die Erfindung betrifft eine Vorrichtung zum Greifen von quaderförmigen Körpern, insbesondere von Steinformlingen, Steinen oder dergleichen, mit gegeneinander verfahrbaren Greiferwangen. Unter Steinformlingen sind im Rahmen der Erfindung insbesondere auch Steinrohlinge zu verstehen.

Durch die DE-A-28 00 407 ist insgesamt eine Vorrichtung der eingangs beschriebenen Ausführungsform zum Greifen von im Zuge des Herstellens von Steinen, insbesondere Kalksandsteinen auf Lücke gepreßten bzw. angelieferten Steinformlingen, bekannt geworden. Bei dieser Vorrichtung sind auf einer Greifertraverse in vorgegebenen Abständen Greiferzangen mit gegeneinander arbeitenden Greiferarmen angeordnet. Die Greiferzangen sind auf der Greifertraverse in Traversenlängsrichtung und orthogonal zur Schließbewegung der Greiferarme gegeneinander verfahrbar. Bei dieser bekannten Ausführungsform können die Greiferzangen nur Steinformlinge ganz bestimmter Formate aufnehmen und transportieren.

Das gleiche gilt für eine andere bekannte Greifvorrichtung zum Setzen von Ziegelformlingen, wie sie in der DE-A-20 02 453 beschrieben wird. Diese Greifvorrichtung besteht aus einer Mehrzahl von Einzelgreiferpaaren, welche zum Erfassen der Ziegelformlinge an ihren Stirnseiten geeignet sind. An jedem Einzelgreifer ist eine drehbare Greiferplatte angeordnet, an deren Drehachse das Ende eines Hebels angelenkt ist, an dessen anderem Ende eine Kolbenzylinderanordnung so angreift, daß die Greiferplatte um einen vorgegebenen Winkel verschwenkbar ist, wobei Halteplatten einer zwischen den Einzelgreiferpaaren vorgesehenen Zwischenzunge gleichfalls drehbar sind.

Der Erfindung liegt die Aufgabe zugrunde, eine Vorrichtung zu schaffen, die zum kantenschonenden Greifen von beliebig geschnittenen Quadern, Steinformlingen, Steinen oder dergleichen sowie deren Transport geeignet ist.

Gemäss den unabhängigen Ansprüchen 1 und 6 wird diese Aufgabe durch die Erfindung bei einer gattungsgemäßen Vorrichtung dadurch gelöst, daß die Greiferwangen in einem vorgegebenen Raster angeordnete Greifzylinder aufweisen, daß die Greifzylinder in orthogonaler Ausrichtung an den Greiferwangen befestigt sind und auf den Wangeninnenseiten in Greifrichtung verfahrbare Kolbenstangen aufweisen, und daß die Greifzylinder wahlweise aktivierbar bzw. deaktivierbar sind, wobei stets nur solche Greifzylinder aktiviert werden, welche zum Ergreifen der betreffenden quaderförmigen Körper in Abhängigkeit von deren Formaten erforderlich sind. - Die erfindungsgemäßen Maßnahmen haben zur Folge, daß sich einerseits jeder Steinformling bzw. jedes Steinformat unter Berücksichtigung der jeweiligen Längsschnitte, Gehrungsschnitte und Schrägschnitte einwandfrei ergreifen und abtransportieren läßt, andererseits die auf Maß geschnittenen Steinrohlinge bzw. Steinformlinge in kantenschonender Weise ergriffen werden können, weil sich jene Greifzylinder deaktivieren lassen, die sich im Kantenbereich dieser Steinrohlinge bzw. Steinformlinge befinden. Das gilt in gleicher Weise für Steine aus Porenbeton oder dergleichen oder andere quaderförmige Körper. Insoweit wird eine an die jeweiligen Steinrohlinge bzw. Steinformate anpassungsfähige Greifvorrichtung verwirklicht, die funktionssicher und mit Kantenschonung arbeitet.

Weitere erfindungswesentliche Merkmale sind im folgenden aufgeführt. Um eine Grobeinstellung im Zuge des Greifvorganges zu gewährleisten, sind die Greiferwangen zweckmäßigerweise in einem aufhängbaren Greiferrahmen gelagert und auf achsparallel angeordneten Lagerholmen gegeneinander verfahrbar. Erst nach dem Zusammenfahren der Greiferwangen um ein vorgegebenes Großmaß werden die in Frage kommenden Greifzylinder aktiviert, um den jeweils in Frage kommenden quaderförmigen Körper bzw. Steinformling, Stein und insbesondere Steinrohling zu erfassen. Dabei kann die erfindungsgemäße Greifvorrichtung mittels des Greiferrahmens verfahrbar, um eine Vertikalachse drehbar und um eine Horizontalachse schwenkbar aufgehängt werden. Zweckmäßigerweise sind die Greifzylinder auf den Wangenaußenseiten befestigt und die Kolbenstangen durch Führungbohrungen in den Greiferwangen hindurchgeführt, um eine störungsfreie Anordnung der Greifzylinder zu gewährleisten. Nach einem besonderen Vorschlag der Erfindung ist vorgesehen, daß die Kolbenstangen der Greifzylinder an ihren Greifenden mit Greiftellern, zum Beispiel gelenkig gelagerten Greiftellern bestückt sind. Dadurch wird im ganzen ein beschädigungsfreies Erfassen von nicht nur Steinformlingen und fertigen Steinen, sondern insbesondere auch von Steinrohlingen gewährleistet. Ferner können die Greiferwangen und/oder Greifzylinder programmsteuerbar sein, um die Aktivierung auf die jeweiligen

Formate der quaderförmigen Körper, Steinformlinge bzw. Steinrohlinge und Steine oder dergleichen unschwer abstellen zu können.

Im folgenden wird die Erfindung anhand einer lediglich ein Ausführungsbeispiel darstellenden Zeichnung näher erläutert; es zeigen:
- Fig. 1: Eine erfindungsgemäße Greifvorrichtung in Stirnansicht,
- Fig. 2: den Gegenstand nach Fig. 1 in Seitenansicht mit andeutungsweise einem schräggeschnittenen Steinrohling
- Fig. 3: ein mögliches Steinprogramm mit verschiedenen Steinformaten.
- Fig. 4: ausschnittsweise eine abgewandelte Ausführungsform des Gegenstandes nach Fig. 1.

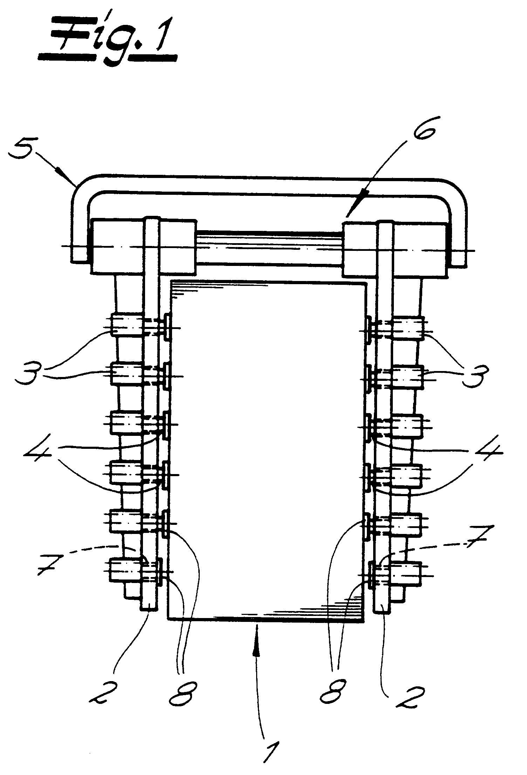

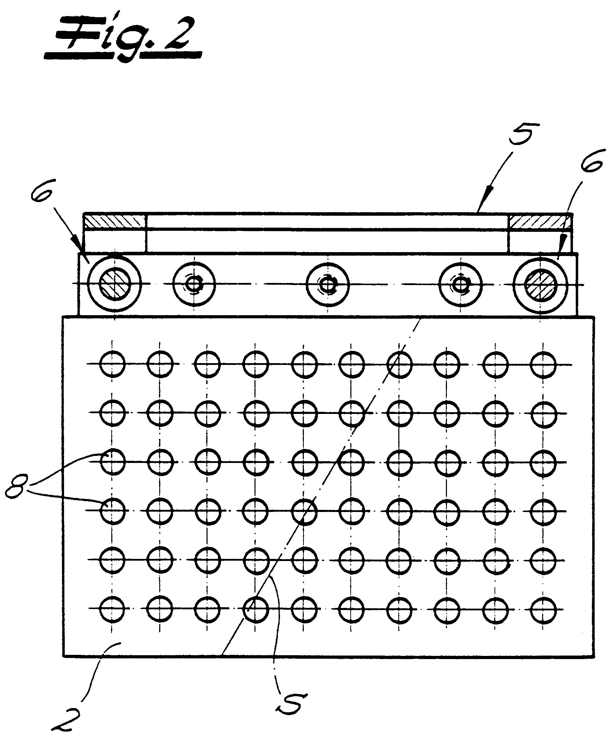

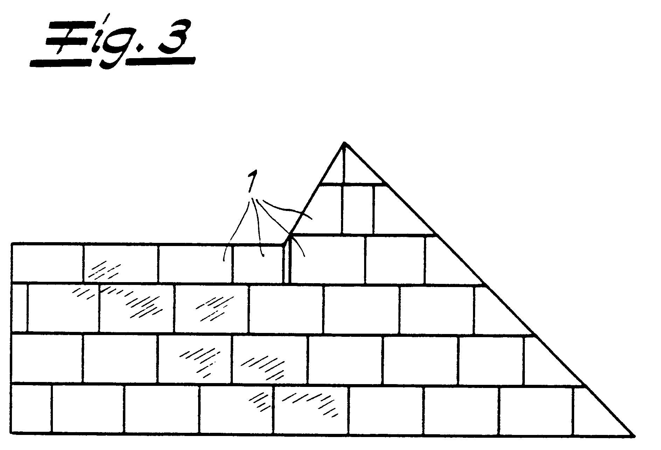

In den Figuren 1 bis 3 ist eine Vorrichtung zum Greifen von quaderförmigen Körpern, insbesondere von Steinrohlingen 1, Steinformlingen, Steinen oder dergleichen dargestellt, welche gegeneinander verfahrbare Greiferwangen 2 aufweist. Die Greiferwangen 2 besitzen in einem vorgegebenen Raster angeordnete Greifzylinder 3. Die Greifzylinder 3 sind in orthogonaler Ausrichtung an den Greiferwangen 2 befestigt und weisen auf den Wangeninnenseiten in Greifrichtung verfahrbare Kolbenstangen 4 auf. Ferner sind die Greifzylinder 3 wahlweise aktivierbar bzw. deaktivierbar. Die Greiferwangen 2 sind in einem aufhängbaren Greiferrahmen 5 gelagert und auf achsparallel angeordneten Lagerholmen 6 gegeneinander verfahrbar. Die Greifzylinder 3 sind auf den Wangenaußenseiten befestigt. Die Kolbenstangen 4 der Greifzylinder 3 sind durch Führungsbohrungen 7 in den Greiferwangen 2 hindurchgeführt. Außerdem sind die Kolbenstangen 4 an ihren Greifenden mit gelenkig gelagerten Greiftellern 8 bestückt. Die Greiferwangen 2 sind wie die Greifzylinder 3 programmgesteuert.

Bei dem dargestellten Ausführungsbeispiel sind jene Greifzylinder 3 deaktiviert, die sich im Bereich des Schrägschnittes S eines Steinrohlings 1 befinden. Außerdem sind jene Greifzylinder 3 deaktiviert, die sich außerhalb des zu erfassenden Steinrohlings 1 befinden.

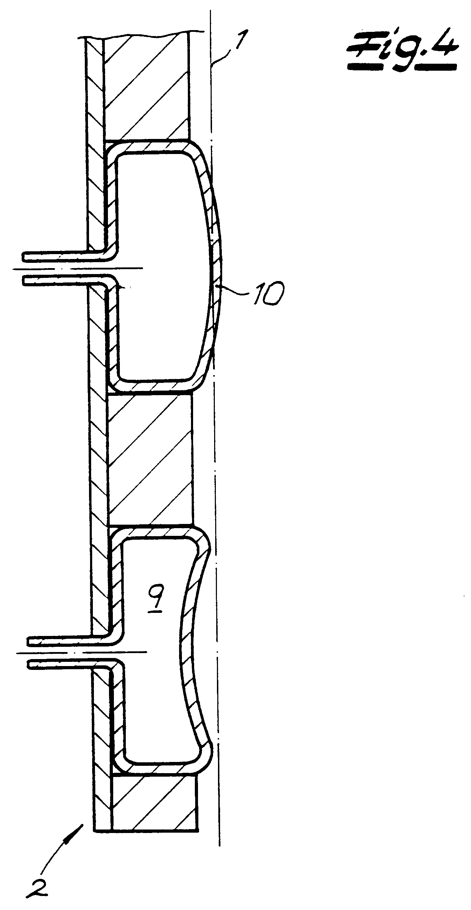

In Fig. 4 ist eine abgewandelte Ausführung dargestellt, bei welcher die Greiferwangen 2 ebenfalls in einem vorgegebenen Raster angeordnete Lufttaschen 9 aufweisen. Die Lufttaschen 9 sind wie die Greifzylinder 3 in orthogonaler Ausrichtung in den Greiferwangen 2 befestigt und mit Druckluft beaufschlagbar. Die mit Druckluft beaufschlagten Lufttaschen 9 bilden auf der Wangeninnenseite vorgewölbte Greifballen 10 zum Greifen und Festhalten der zwischen den Greiferwangen 2 befindlichen Steinrohlinge 1. Die Lufttaschen 9 sind wahlweise entweder drucklos oder mit Druckluft beaufschlagbar. - Dieser erfindungsgemäßen Ausführungsform kommt selbständige Bedeutung zu.

## Patentansprüche

1. Vorrichtung zum Greifen von quaderförmigen Körpern, insbesondere von Steinformlingen (1), Steinen oder dergleichen mit gegeneinander verfahrbaren Greiferwangen (2), **dadurch gekennzeichnet**, daß die Greiferwangen (2) in einem vorgegebenen Raster angeordnete Greifzylinder (3) aufweisen, daß die Greifzylinder (3) in orthogonaler Ausrichtung an den Greiferwangen (2) befestigt sind und auf den Wangeninnenseiten in Greifrichtung verfahrbare Kolbenstangen (4) aufweisen, und daß die Greifzylinder (3) wahlweise aktivierbar bzw. deaktivierbar sind, wobei stets nur solche Greifzylinder (3) aktiviert werden, welche zum Ergreifen der betreffenden quaderförmigen Körper in Abhängigkeit von deren Formaten erforderlich sind.

2. Vorrichtung nach Anspruch 1, dadurch gekennzeichnet, daß die Greiferwangen (2) in einem aufhängbaren Greiferrahmen (5) gelagert und auf achsparallel angeordneten Lagerholmen (6) gegeneinander verfahrbar sind.

3. Vorrichtung nach Anspruch 1 oder 2, dadurch gekennzeichnet, daß die Greifzylinder (3) auf den Wangenaußenseiten der Greiferwangen (2) befestigt sind und die Kolbenstangen (4) durch Führungsbohrungen (7) in den Greiferwangen (2) hindurchgeführt sind.

4. Vorrichtung nach einem der Ansprüche 1 bis 3, dadurch gekennzeichnet, daß die Kolbenstangen (4) der Greifzylinder (3) an ihren Greifenden mit Greiftellern (8), zum Beispiel gelenkig gelagerten Greiftellern (8) bestückt sind.

5. Vorrichtung nach einem der Ansprüche 1 bis 4, dadurch gekennzeichnet, daß die Greiferwangen (2) und/oder Greifzylinder (3) programmsteuerbar sind.

6. Vorrichtung zum Greifen von quaderförmigen Körpern, insbesondere von Steinformlingen (1), Steinen oder dergleichen mit gegeneinander verfahrbaren Greiferwangen (2), dadurch gekennzeichnet, daß die Greiferwangen (2) in einem vorgegebenen Raster angeordnete Lufttaschen (9) aufweisen, daß die Lufttaschen (9) in orthogonaler Ausrichtung in den Greiferwangen (2) befestigt und mit Druckluft beaufschlagbar sind, daß die mit Druckluft beaufschlagten Lufttaschen (9) auf der Wangeninnenseite vorgewölbte Greifballen (10) bilden, und daß die Lufttaschen (9) wahlweise drucklos bzw. mit Druckluft beaufschlagbar sind, wobei stets nur solche Lufttaschen (9) aktiviert werden, welche zum Ergreifen der betreffenden quaderförmigen Körper in Abhängigkeit von deren Formaten erforderlich sind.

## Claims

1. A device for gripping rectangular bodies, in particular, stone blocks (1), stones or similar with gripper jaws (2) that are displaceable in relation to each other, **characterised by** that the gripper jaws (2) contain gripping cylinders (3) arranged in a specified grid layout, that the gripping cylinders (3) are orthogonally fixed to the gripper jaws (2) and contain piston rods (4) on the insides of the jaws that are displaceable in gripping direction and that the gripping cylinders (3) can be selectively activated or deactivated with only those gripping cylinders (3) being activated that are required for gripping the respective rectangular body, depending on its dimensions.

2. A device according to claim 1, **characterised by** that the gripper jaws (2) are secured in a suspendable gripper frame (5) and can be displaced in relation to each other along bearing shafts (6) with parallel axes.

3. A device according to claim 1 or 2, **characterised by** that the gripping cylinders (3) are secured to the outside of the gripper jaws (2) and that the piston rods (4) run through the guide holes (7) in the gripper jaws (2).

4. A device according to one of the claims 1 to 3, **characterised by** that the piston rods (4) of the gripping cylinders (3) contain gripping ends equipped with gripping discs (8) such as articulated gripping discs (8).

5. A device according to one of the claims 1 to 4, **characterised by** that the gripper jaws (2) and/or the gripping cylinders (3) can be program-controlled.

6. A device for gripping rectangular bodies, in particular, stone blocks (1), stones or similar with gripper jaws (2) that are displaceable in relation to each other, **characterised by** that the gripper jaws (2) contain air bags (9) arranged in a specified grid layout and that the air bags (9) are orthogonally positioned in the gripper jaws (2) and can be filled with compressed air, that the air bags (9) filled with compressed air form pre-arched gripper pads (10) on the inside of the jaws and that the air bags (9) can be selectively filled with or emptied of compressed air with only those air bags (9) being activated that are required for gripping the respective rectangular body, depending on its dimensions.

## Revendications

1. Dispositif pour saisir des corps de forme parallélipipédique, en particulier des articles façonnés en pierre (1), des pierres ou analogues, comprenant des faces de préhension (2) aptes à se déplacer l'une vers l'autre, caractérisé en ce que les faces de préhension (2) présentent des cylindres de préhension (3) disposés en formant un réseau prédéfini, en ce que les cylindres de préhension (3) sont fixés en alignement orthogonal par rapport aux faces de préhension (2) et présentent des tiges de pistons (4) aptes à se déplacer dans la direction de préhension sur les côtés internes des faces, et en ce que les cylindres de préhension (3) peuvent être activés, respectivement désactivés de manière sélective, dans lequel, à tout moment, seuls sont activés les cylindres de préhension (3) qui sont requis pour saisir les corps correspondants de forme parallélipipédique en fonction de leurs formats.

2. Dispositif selon la revendication 1, caractérisé en ce que les faces de préhension (2) sont montées dans un cadre de préhension (5) qui peut être suspendu et sont à même de se déplacer l'une vers l'autre sur des traverses de montage (6) disposées parallèlement à l'axe.

3. Dispositif selon la revendication 1 ou 2, caractérisé en ce que les cylindres de préhension (3) sont fixés sur les côtés externes des faces de préhension (2) et les tiges de pistons (4) sont guidées à travers des alésages de guidage (7) pratiqués dans les faces de préhension (2).

4. Dispositif selon l'une quelconque des revendications 1 à 3, caractérisé en ce que les tiges de pistons (4) des cylindres de préhension (3) sont équipées, à leurs extrémités de préhension, de disques de préhension (8), par exemple de disques de préhension (8) montés en articulation.

5. Dispositif selon l'une quelconque des revendications 1 à 4, caractérisé en ce que les faces de préhension (2) et/ou les cylindres de préhension (3) peuvent être commandés de manière programmée.

6. Dispositif pour saisir des corps de forme parallélipipédique, en particulier des articles façonnés en pierre (1), des pierres ou analogues, comprenant des faces de préhension (2) aptes à se déplacer l'une vers l'autre, caractérisé en ce que les faces de préhension (2) présentent des poches d'air (9) disposées sous forme d'un réseau prédéfini, en ce que les poches d'air (9) sont fixées en alignement orthogonal dans les faces de préhension (2) et peuvent être chargées avec de l'air sous pression, en ce que les poches d'air (9) chargées avec de l'air sous pression forment, sur le côté interne des faces, des coussinets de préhension prébombés (10) et en ce que les poches d'air (9) peuvent être activées de manière sélective en l'absence de pression, respectivement avec de l'air sous pression, dans lequel, à tout moment, sont activées uniquement les poches d'air (9) qui sont requises pour les corps correspondants de forme parallélipipédique en fonction de leurs formats.
